# EUROPEAN PATENT APPLICATION

(11) **EP 4 686 551 A1**
(43) Date of publication of application: **04.02.2026**
(21) Application number: 25179062.2
(22) Date of filing: 27.05.2025
(51) Int. Cl.: B29C 67/20, B29C 70/66, C08J 9/32

(54) **SYNTACTIC-FOAM PARTS AND ASSOCIATED METHODS OF MAKING THE SAME**

(30) Priority: 30.07.2024 US 202418788996
(71) Applicant: The Boeing Company, Arlington, VA 22202 (US)
(72) Inventor: WILENSKI, Mark, Arlington, 22202 (US); GROSS, Adam, Arlington, 22202 (US); GREGERSEN, Kimberly-Alice, Arlington, 22202 (US)
(74) Representative: Boult Wade Tennant LLP

(57) **Abstract**

A method (200) of making a syntactic-foam (142) part includes positioning (210) at least one thermally-conductive media layer (150) within a mold (102) such that at least a portion of the at least one thermally-conductive media layer is spaced apart from an interior surface (152) of the mold. The method also includes loading (220) low-density spheres (120) into the mold so they surround the at least one thermally-conductive media layer. The method further includes introducing (230) a resin (138) into the mold so that the at least one thermally-conductive layer and the low-density spheres are embedded within the resin. The at least one thermally-conductive media layer has a thermal conductivity that is greater than a thermal conductivity of the low-density spheres and the resin. The method additionally includes solidifying (240) the resin after the resin is introduced into the mold. The method also includes transferring (250) heat through the at least one thermally-conductive media layer when the resin is being solidified.

## Description

### FIELD

This disclosure relates generally to buoyancy foams, and more particularly to syntactic buoyancy foams made of low-density spheres embedded in a resin.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, marine platforms, and other marine-based systems. Typical buoyancy foams are compression resistant and, in some cases, water resistant, durable, and reliable. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the above-discussed shortcomings of prior art techniques.

The following is a non-exhaustive list of examples, which may or may not be claimed, of the subject matter, disclosed herein.

Disclosed herein is a method of making a syntactic-foam part. The method includes positioning at least one thermally-conductive media layer within a mold such that at least a portion of the at least one thermally-conductive media layer is spaced apart from an interior surface of the mold. The method also includes loading low-density spheres into the mold such that the low-density spheres form a lattice arrangement within the mold and surround the at least one thermally-conductive media layer. The method further includes introducing a resin into the mold so that the at least one thermally-conductive layer and the low-density spheres are embedded within the resin. The at least one thermally-conductive media layer has a thermal conductivity that is greater than a thermal conductivity of the low-density spheres and a thermal conductivity of the resin. The method additionally includes solidifying the resin after the resin is introduced into the mold. The method also includes transferring heat through the at least one thermally-conductive media layer when the resin is being solidified. The preceding subject matter of this paragraph characterizes example 1 of the present disclosure.

The at least one thermally-conductive media layer may be positioned within the mold before the low-density spheres are loaded into the mold. The preceding subject matter of this paragraph characterizes example 2 of the present disclosure, wherein example 2 also includes the subject matter according to example 1, above.

The at least one thermally-conductive media layer may be porous. At least some of the low-density spheres pass through the at least one thermally-conductive media layer when the low-density spheres are loaded into the mold. The preceding subject matter of this paragraph characterizes example 3 of the present disclosure, wherein example 3 also includes the subject matter according to example 2, above.

The at least one thermally-conductive media layer may be perpendicular to a loading direction of the low-density spheres and a filling direction of the resin. The preceding subject matter of this paragraph characterizes example 4 of the present disclosure, wherein example 4 also includes the subject matter according to example 3, above.

The at least one thermally-conductive media layer may be parallel to a loading direction of the low-density spheres and a filling direction of the resin. The preceding subject matter of this paragraph characterizes example 5 of the present disclosure, wherein example 5 also includes the subject matter according to any of examples 2-4, above.

The at least one thermally-conductive media layer may be partially porous such that the low-density spheres do not pass through the at least one thermally-conductive media layer when loaded into the mold, and the resin does pass through the at least one thermally-conductive media layer when introduced into the mold. The preceding subject matter of this paragraph characterizes example 6 of the present disclosure, wherein example 6 also includes the subject matter according to example 5, above.

The at least one thermally-conductive media layer may be porous. At least a portion of the resin may pass through the at least one thermally-conductive media layer when the resin is introduced into the mold. The preceding subject matter of this paragraph characterizes example 7 of the present disclosure, wherein example 7 also includes the subject matter according to any of examples 1-6, above.

Loading the low-density spheres into the mold may include loading a first quantity of the low-density spheres and loading a second quantity of the low-density spheres. Positioning the at least one thermally-conductive media layer within the mold may comprise positioning the at least one thermally-conductive media layer onto the first quantity of the low-density spheres after the first quantity of the low-density spheres is loaded into the mold. The second quantity of the low-density spheres may be loaded onto the at least one thermally-conductive media layer. The preceding subject matter of this paragraph characterizes example 8 of the present disclosure, wherein example 8 also includes the subject matter according to any of examples 1-7, above.

The at least one thermally-conductive media layer may extend across an entirety of a width, a height, or a length of the mold and is in thermal conduction engagement with the interior surface of the mold at opposing ends of the at least one thermally-conductive media layer. At least a portion of the heat transferred through the at least thermally-conductive media layer may be transferred directly to the interior surface of the mold from the at least one thermally-conductive media layer via conduction. The preceding subject matter of this paragraph characterizes example 9 of the present disclosure, wherein example 9 also includes the subject matter according to any of examples 1-8, above.

Positioning the at least one thermally-conductive media layer within the mold may include positioning a plurality of thermally-conductive media layers within the mold at spaced-apart locations within the mold. The low-density spheres may be loaded into the mold such that the low-density spheres surround the plurality of thermally-conductive media layers. The resin may be introduced into the mold so that the plurality of thermally-conductive media layers are embedded within the resin. The preceding subject matter of this paragraph characterizes example 10 of the present disclosure, wherein example 10 also includes the subject matter according to any of examples 1-9, above.

The plurality of thermally-conductive media layers may be uniformly spaced within the mold. The preceding subject matter of this paragraph characterizes example 11 of the present disclosure, wherein example 11 also includes the subject matter according to example 10, above.

The plurality of thermally-conductive media layers may be non-uniformly spaced within the mold. The preceding subject matter of this paragraph characterizes example 12 of the present disclosure, wherein example 12 also includes the subject matter according to any of examples 10-11, above.

The at least one thermally-conductive media layer may have a specific thermal conductivity between, and inclusive of, 80 watts per meter-kelvin per grams per cubic centimeter (W/mK/(g/cc)) and 1,400 W/mK/(g/cc). The preceding subject matter of this paragraph characterizes example 13 of the present disclosure, wherein example 13 also includes the subject matter according to any of examples 1-12, above.

The at least one thermally-conductive media layer may include one of a fabric, continuous fibers, chopped fibers, rods, tubes, strips, a perforated sheet, or an expanded sheet. The preceding subject matter of this paragraph characterizes example 14 of the present disclosure, wherein example 14 also includes the subject matter according to any of examples 1-13, above.

Further disclosed herein is a syntactic-foam part that includes a resin in a cured state. The syntactic-foam part also includes low-density spheres arranged in a lattice arrangement and embedded within the resin. The syntactic-foam part further includes at least one thermally-conductive media layer surrounded by the low-density spheres and embedded within the resin. The at least one thermally-conductive media layer has a thermal conductivity that is greater than a thermal conductivity of the low-density spheres and a thermal conductivity of the resin. The preceding subject matter of this paragraph characterizes example 15 of the present disclosure.

The at least one thermally-conductive media layer may be porous. At least some of the low-density spheres may be sized to be passable through the at least one thermally-conductive media layer. The preceding subject matter of this paragraph characterizes example 16 of the present disclosure, wherein example 16 also includes the subject matter according to example 15, above.

The at least one thermally-conductive media layer may be porous. The resin, when in a flowable state, may be passable through the at least one thermally-conductive media layer. The preceding subject matter of this paragraph characterizes example 17 of the present disclosure, wherein example 17 also includes the subject matter according to any of examples 15-16, above.

The at least one thermally-conductive media layer may extends across an entirety of a width, a height, or a length of the syntactic-foam part. The preceding subject matter of this paragraph characterizes example 18 of the present disclosure, wherein example 18 also includes the subject matter according to any of examples 15-17, above.

The syntactic-foam part may comprise a plurality of thermally-conductive media layers spaced apart from each other. The preceding subject matter of this paragraph characterizes example 19 of the present disclosure, wherein example 19 also includes the subject matter according to any of examples 15-18, above.

The plurality of thermally-conductive media layers may be uniformly spaced within the syntactic-foam part. The preceding subject matter of this paragraph characterizes example 20 of the present disclosure, wherein example 20 also includes the subject matter according to example 19, above.

The plurality of thermally-conductive media layers may be non-uniformly spaced within the syntactic-foam part. The preceding subject matter of this paragraph characterizes example 21 of the present disclosure, wherein example 21 also includes the subject matter according to any of examples 19-20, above.

The at least one thermally-conductive media layer may have a specific thermal conductivity between, and inclusive of, 80 watts per meter-kelvin per grams per cubic centimeter (W/mK/(g/cc)) and 1,400 W/mK/(g/cc). The preceding subject matter of this paragraph characterizes example 22 of the present disclosure, wherein example 22 also includes the subject matter according to any of examples 15-21, above.

The at least one thermally-conductive media layer may comprise one of a fabric, continuous fibers, chopped fibers, rods, tubes, strips, a perforated sheet, or an expanded sheet. The preceding subject matter of this paragraph characterizes example 23 of the present disclosure, wherein example 23 also includes the subject matter according to any of examples 15-22, above.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in some examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only some examples of the subject matter and are not therefore to be considered to be limiting of its scope, the subject matter will be described and explained with additional specificity and detail through the use of the drawings, in which:
Figure 1 is a schematic perspective view of a mold for making syntactic-foam parts;
Figure 2 is a schematic cross-sectional front elevation view, taken along the line A-A of Figure 1, of the mold of Figure 1;
Figure 3 is a schematic cross-sectional front elevation view, taken along the line A-A of Figure 1, of low-density spheres being loaded into the mold of Figure 1;
Figure 4 is a schematic cross-sectional front elevation view, taken along the line A-A of Figure 1, of more low-density spheres being loaded into the mold of Figure 1;
Figure 5 is a schematic cross-sectional front elevation view, taken along the line A-A of Figure 1, of resin being introduced into the mold of Figure 1;
Figure 6A is a schematic cross-sectional front elevation view, taken along the line A-A of Figure 1, of resin in the mold of Figure 1 being heated;
Figure 6B is a schematic cross-sectional front elevation view, taken along the line A-A of Figure 1, of heat being released from the resin in the mold of Figure 1;
Figure 6C is a perspective view of a syntactic-foam part;
Figure 7 is a schematic cross-sectional front elevation view, taken along a line similar to the line A-A of Figure 1, of another mold;
Figure 8 is a schematic perspective view of another mold for making syntactic-foam parts;
Figure 9 is a schematic cross-sectional top plan view, taken along the line B-B of Figure 8, of the mold of Figure 8;
Figure 10 is a schematic cross-sectional front elevation view, taken along the line C-C of Figure 8, of low-density spheres being loaded into the mold of Figure 8;
Figure 11 is a schematic cross-sectional front elevation view, taken along the line C-C of Figure 8, of resin being introduced into the mold of Figure 8;
Figure 12 is a schematic cross-sectional front elevation view, taken along the line C-C of Figure 8, of an alternative configuration of the mold of Figure 8;
Figure 13 is a perspective view of a thermally-conductive layer, made of a perforated sheet and used for making and forming a portion of a syntactic-foam part;
Figure 14 is a perspective view of a thermally-conductive layer, made of discontinuous or chopped fibers and used for making and forming a portion of a syntactic-foam part;
Figure 15 is a perspective view of a thermally-conductive layer, made of continuous fibers and used for making and forming a portion of a syntactic-foam part;
Figure 16 is a perspective view of a thermally-conductive layer, made of fabric and used for making and forming a portion of a syntactic-foam part;
Figure 17 is a schematic cross-sectional front elevation view, taken along the line A-A of Figure 1, of low-density spheres being loaded into an alternative configuration of the mold of Figure 1;
Figure 18 is a schematic cross-sectional front elevation view, taken along the line A-A of Figure 1, of a thermally-conductive media layer being positioned onto low-density spheres in the alternative configuration of the mold of Figure 1;
Figure 19 is a schematic cross-sectional front elevation view, taken along the line A-A of Figure 1, of low-density spheres being loaded onto the thermally-conductive media layer of Figure 18;
Figure 20 is a schematic cross-sectional front elevation view, taken along the line A-A of Figure 1, of low-density spheres being loaded onto a second thermally-conductive media layer positioned on the low-density spheres loaded into the mold in Figure 19;
Figure 21 is a schematic cross-sectional front elevation view, taken along the line A-A of Figure 1, of resin being introduced into the alternative configuration of the mold shown in Figure 17;
Figure 22 is a schematic perspective view of yet another mold for making syntactic-foam parts; and
Figure 23 is a schematic flow chart of another method of making a syntactic-foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic-foam parts include stacking spheres into a mold and infusing the mold with a liquid resin, which embeds the spheres. The liquid resin is then solidified (e.g., cured) by heating the resin to a desired solidification temperature. Solidification of the resin occurs due to an exothermic reaction initiated by the heat added to the resin. The exothermic reaction causes the resin to release heat, which increases the local temperature of the resin. The release of heat also acts to accelerate the exothermic reaction, thus further increasing the local temperature of the resin. Because syntactic-foams, in particular the spheres of syntactic-foams, are good thermal insulators, the local increase and acceleration of the temperature of the resin can reach dangerously high temperatures in central locations within the mold. The significant temperature gradients within the mold caused by such high temperature spikes can result in damage to the syntactic-foam part and/or the mold, which can negatively affect the quality of the syntactic-foam part by introducing residual stresses and cracks in the part. Some conventional methods for making syntactic-foam parts attempt to mitigate temperature spikes within a mold by slowly heating the resin over an extended period of time, which can be economically expensive by limiting production rates, tying up expensive tools for long durations, and limits the size of parts that can be made.

Described herein are examples of a method of making syntactic-foam parts, made of low-density spheres embedded in a resin, that reduces dangerous temperature spikes as the resin is solidified. The method incorporates one or more thermally-conductive media layers, which form a portion of the syntactic-foam part and are porous to the resin, to improve the thermal conductivity of the part and help distribute heat throughout the part as the resin is being solidified. By distributing the heat generated by the exothermic reactions associated with solidification of the resin in this manner, thus reducing the occurrences of temperature spikes, the resin can be solidified quicker and more reliably within specified temperature and time cycles with a lower likelihood of damage to the part during manufacturing and quality issues after manufacturing, and larger parts can be made. Additionally, the thermally-conductive media layers can be configured and arranged to promote thermal conductivity in particular locations and directions within the part. The thermally-conductive media layer has a relatively high specific thermal conductivity so that the addition of the thermally-conductive media layer to the part does not significantly increase the overall density of the part. Also, the improved thermal conductivity of the syntactic-foam parts promoted by the thermally-conductive media layers can be utilized in the field to transfer heat through the parts, such as to heat and/or cool adjacent components.

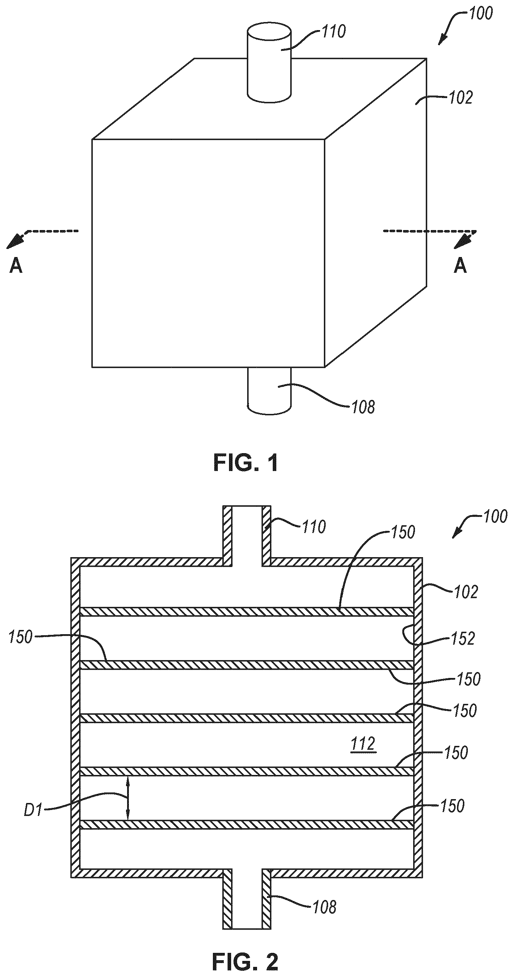

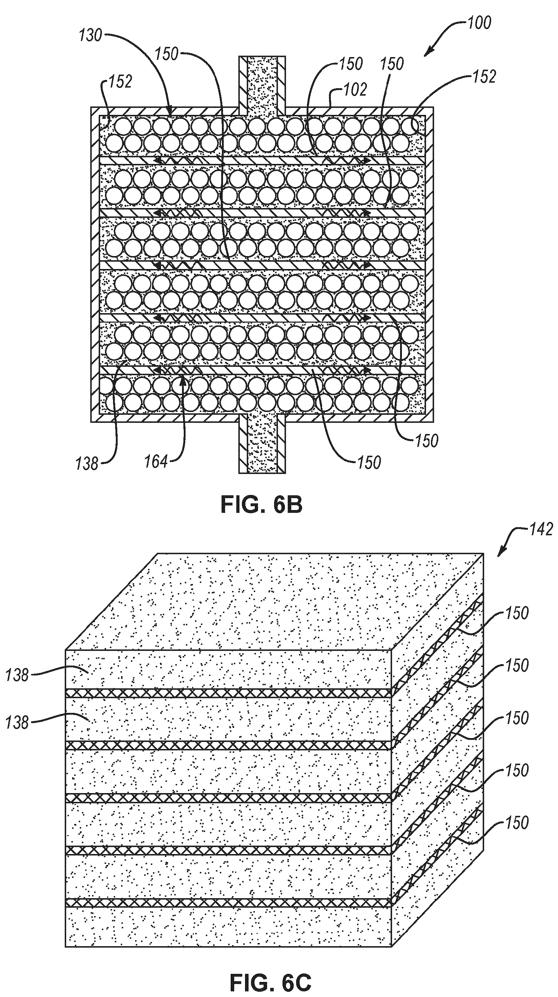

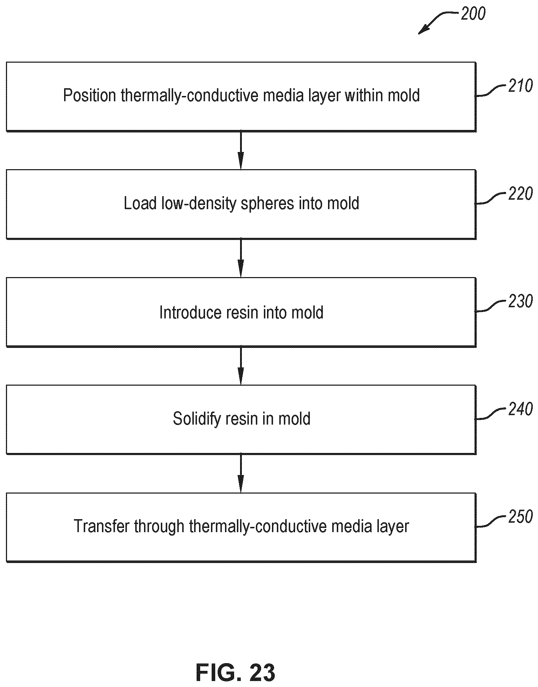

Referring to Figure 23, according to some examples, a method 200 of making a syntactic-foam part, such as the syntactic-foam part 142 of Figure 6C, is shown. Referring generally to Figure 23 and specifically to Figures 1 and 2, the method 200 includes (block 210) positioning one or more thermally-conductive media layers 150 within a mold 102. When positioned within the mold 102, at least a portion of each one of the thermally-conductive media layers 150 is spaced apart from an interior surface 152 of the mold 102.

Moreover, in some examples, such as shown in Figure 2, when positioned within the mold 102, at least one end or edge of each one of the thermally-conductive media layers 150 is in thermal conduction engagement with the interior surface 152 of the mold. As used herein, thermal conduction engagement means any engagement that enables heat transfer, via conduction, from a thermally-conductive media layer 150 directly to the interior surface 152. In some examples, as shown in Figure 2, the thermally-conductive media layers 150 are in thermal conduction engagement with the interior surface 152 by being in intimate contact with the interior surface 152, such as via fasteners, thermally conductive adhesive, thermally conductive paste, 3-D printing onto the interior surface 152, and/or the like. In some examples, as shown in Figure 2, at least two opposing ends or edges of the thermally-conductive media layers 150 are in thermal conduction engagement with the interior surface 152 on opposite sides of the mold 102. In yet some examples, all ends or edges of the thermally-conductive media layers 150 are in thermal conduction engagement with the interior surface 152, such that each one of the thermally-conductive media layers 150 has an area or perimeter that matches the area or perimeter of the interior cavity 112. For example, the interior cavity 112 can have a quadrilateral-shaped area and perimeter and the thermally-conductive media layers 150 can also have a quadrilateral-shaped area and perimeter.

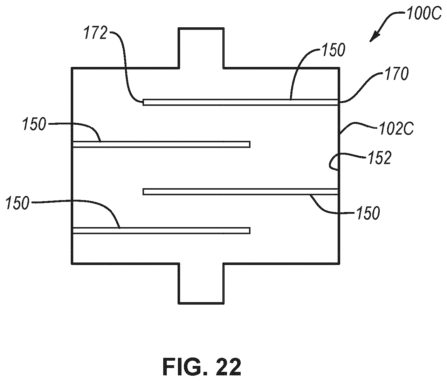

Alternatively, and referring to Figure 22, in some examples, when the thermally-conductive media layers 150 are positioned within the mold 102, at least one end or edge of the thermally-conductive media layers 150 is not in thermal conduction engagement with the interior surface 152. For example, in Figure 22, a fixed end 170 of a thermally-conductive media layer 150 can be in thermal conduction engagement with an interior surface 152 of a mold 102C of a tool 100C, and a free end 172 of the thermally-conductive media layer 150, opposite the fixed end 170, is not in thermal conduction engagement with the interior surface 152. Instead, the free end 172 is spaced apart from any interior surface 152 of the mold 102C.

Although not shown, in some examples, no end or edge of at least one thermally-conductive media layer 150 is in thermal conduction engagement with the interior surface 152. Such examples can be useful in environments where the thermally-conductive media layers 150 are not compatible with the environment. Also, because the thermally-conductive media layer 150 requires less material in such examples, the resulting part is lighter (e.g., has less parasitic weight) than parts where the thermally-conductive media layers 150 extend all the way to the interior surface 152.

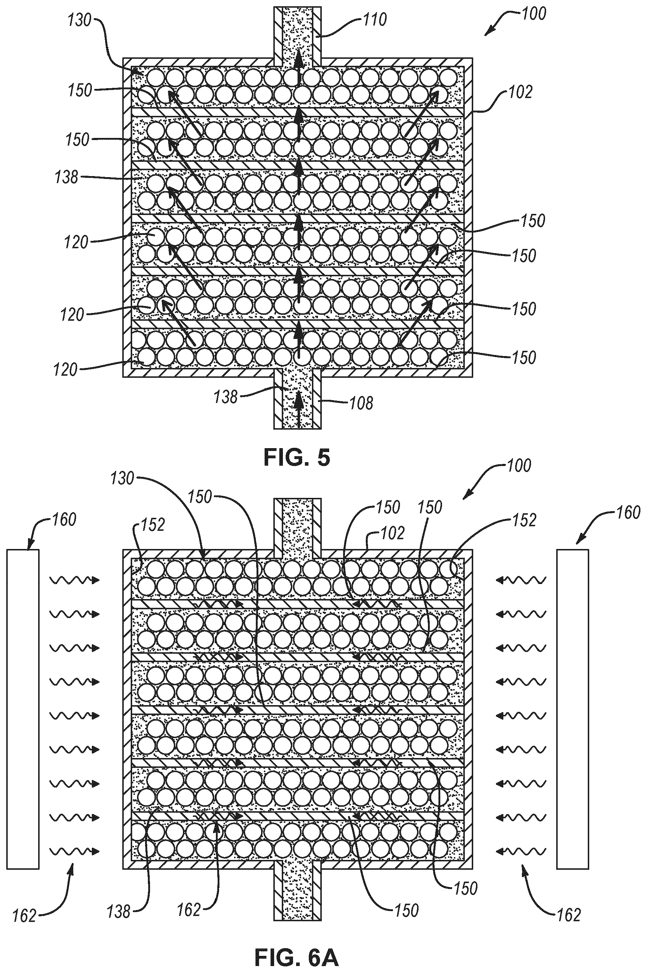

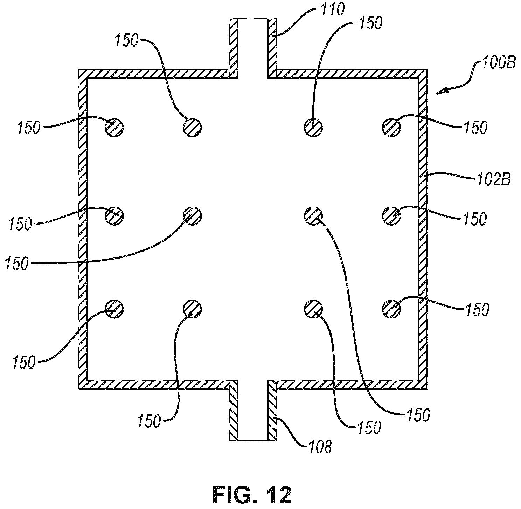

In several of the examples described above and shown herein, the thermally-conductive media layer 150 has a sheet-like construction. However, in some examples, each one of the thermally-conductive media layers 150 can be an elongated strip, rod, or tube of material. For example, as shown in Figure 12, in some examples of a tool 100B, each thermally-conductive media layer 150 is an elongated strip, rod, or tube that has a length that is significantly greater than its width. Accordingly, each one of the thermally-conductive media layers 150 of the example of Figure 12 may extend across an entirety of a length of a mold 102B, but extends across only a portion of a width of the mold 102B. In some examples, each one of the thermally-conductive media layers 150 of the example of Figure 12 is a strip, rod, or tube made of a thermally-conductive material, such as a fiber-reinforced polymer material, a metallic material, a graphitic material, and/or the like. In some other examples, each one of the thermally-conductive media layers 150 of the example of Figure 12 is a strip, rod, or tube made of a foam material that is coated with a thermally-conductive material, such as a fiber-reinforced polymer material, a metallic material, and/or the like. In yet some alternative examples, each one of the thermally-conductive media layers 150 of the example of Figure 12 is a strip, rod, or tube made of a foam having a thermal conductivity that is greater than the thermal conductivity of the low-density spheres 120 and the resin 138, such as those shown in Figure 5.

Although each one of the thermally-conductive media layers 150 in the illustrated examples is a continuous layer, or extends continuously from one end to an opposite end, in some examples, at least one of the thermally-conductive media layers 150 extends discontinuously from one end to an opposite end. For example, a thermally-conductive media layer 150 can include multiple spaced-apart segments in close proximity to each other, but not in contact with each other.

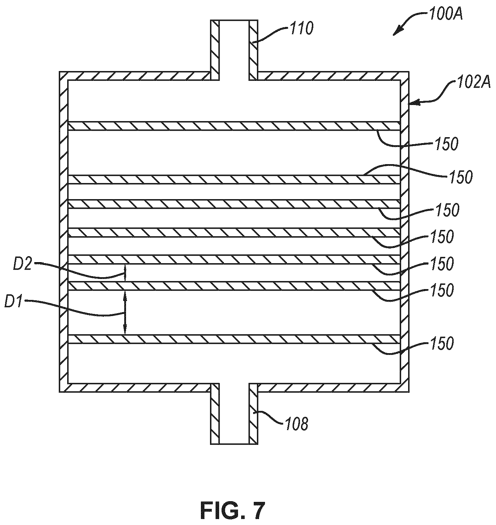

According to some examples, a plurality of thermally-conductive media layers 150 are positioned within the mold 102. In some examples, as shown in Figures 2-6A, the thermally-conductive media layers 150 are uniformly spaced within the mold 102. For example, a distance *D1* between adjacent ones of the thermally-conductive media layers 150 can be the same. Alternatively, in some examples, such as shown in Figure 7, the thermally-conductive media layers 150 are non-uniformly spaced within the mold 102. For example, a distance *D1* between an adjacent two of the thermally-conductive media layers 150 can be different (e.g., larger) than a distance *D2* between another adjacent two of the thermally-conductive media layers 150. In some examples, some of the thermally-conductive media layers 150 can be positioned closer together in locations within the mold 102 that are more susceptible to temperature spikes than at other locations within the mold 102 where the thermally-conductive media layers 150 can be spaced further apart.

According to some examples, each one of the thermally-conductive media layers 150 is planar or lies within the same plane. In such examples, the thermally-conductive media layers 150 have a sheet-like or plate-like appearance with a thickness less than a width or length or substantially less than a width or length. Therefore, in some examples, such as shown in Figure 2, the thermally-conductive media layers 150 can be parallel to each other. However, in some other examples, one or more of the thermally-conductive media layers 150 can be non-planar or curved.

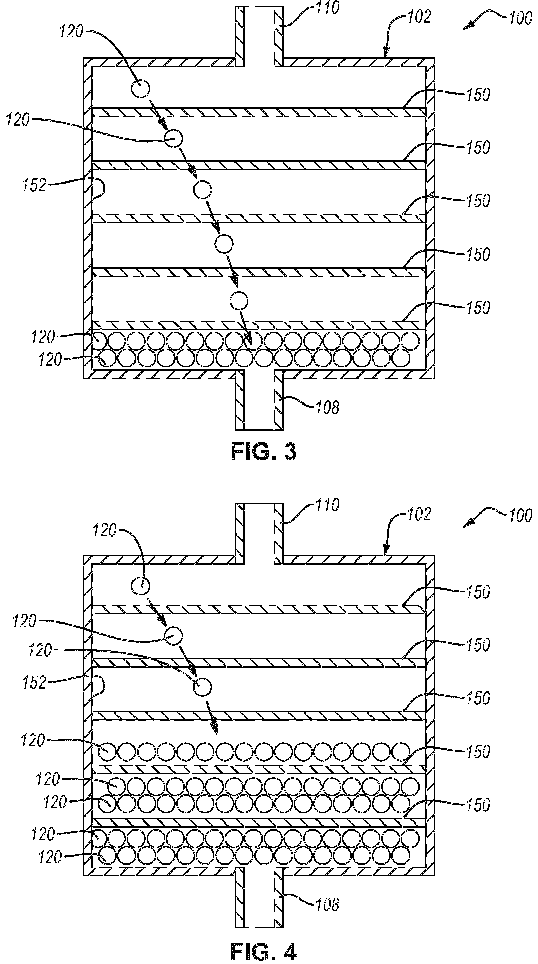

Referring generally to Figure 23, and specifically to Figures 3 and 4, the method 200 additionally includes (block 220) loading low-density spheres 120 into the mold 102. In some examples, the mold 102 includes a selectively openable lid that selectively covers an opening in the mold 102 through which the low-density spheres 120 can be loaded into the mold 102. The low-density spheres 120 are loaded so that the low-density spheres 120 form a lattice arrangement 130 within the mold 102 (see, e.g., Figure 5). In the lattice arrangement 130, each one of the low-density spheres 120 contacts each one of at least two other ones of the low-density spheres 120 at a single contact point. The low-density spheres 120 can be arranged to form at least a bi-modal or tri-modal distribution of spheres in some examples. Additionally, in the lattice arrangement 130, an interstitial space is defined between a corresponding one of the low-density spheres 120 and the at least two other ones of the low-density spheres 120. Because the illustrations show the low-density spheres 120 in 2-dimensional space, each interstitial space is shown defined by just three of the low-density spheres 120. However, it is recognized that the lattice arrangement 130, when considered in 3-dimensional space, would have low-density spheres 120 into the page and/or low-density spheres out of the page. Accordingly, in 3-dimensional space, each interstitial space can be further defined by one or two additional low-density spheres 120. According to some examples using spheres of a single size, all or portions of the lattice arrangement 130 is at most 74% packed with the low-density spheres 120, such as at most 69% packed in some examples, and at most 50% packed in some other examples. Interstitial spaces are defined herein as spaces between one of the low-density spheres 120 and at least one of: (1) a second low-density sphere 120; and (2) an inner perimeter of the mold 102.

As used herein, a lattice arrangement is a 3-dimensional arrangement of objects (e.g., low-density spheres). The 3-dimensional arrangement of objects need not be a perfectly repeating geometrical arrangement of objects to be considered a lattice arrangement. Rather, a lattice arrangement can be any grouping, bed, tight packing, or loose packing of objects, whether forming a perfectly repeating geometrical arrangement, a substantially repeating geometrical arrangement, or a non-repeating geometrical arrangement of the objects.

The interior cavity 112 of the mold 102 defines the overall size and shape of the syntactic-foam part 142, an example of which is shown in Figure 6C. The syntactic-foam part 142, and thus the interior cavity 112 of the mold, can have any of various shapes and sizes, such as, but not limited to, standard shapes (e.g., rectangular prisms, cuboid, cube, pyramid, cone, and/or the like) or complex shapes. Additionally, in some examples, the size and shape of the interior cavity 112 is configured to ensure low-density spheres 120, when loaded into the mold 102, form the lattice arrangement 130 (see, e.g., Figure 5). Therefore, the size and shape of the interior cavity 112 can be dependent on the size of the low-density spheres 120, or vice versa. It is noted that the low-density spheres 120 and the mold 102 are not necessarily to scale. For example, in the illustrated renderings, the size of the low-density spheres 120 is abnormally large relative to the size of the mold 102 for better clarity in showing and describing the examples. In practice, the size of the low-density spheres 120 will be much smaller relative to the size of the mold 102 than as depicted. In some examples, the maximum diameter D of the low-density spheres 120 is between, and inclusive of, 5 microns and 153 millimeters (mm), such as between, and inclusive of, 20 microns and 10,000 microns in some examples, such as between, and inclusive of, 25 microns and 5,000 microns in some examples, such as between, and inclusive of, 250 microns and 35,000 in another example, and between, and inclusive of, 500 microns and 1,000 microns in yet some other examples.

According to some examples, each one or at least one of the low-density spheres 120 is a hollow sphere. A hollow sphere has a hollow interior space defined by an interior surface of a sidewall that also defines an exterior surface of the low-density sphere 120. A hollow sphere has a thin-walled construction. In other words, a thickness of the sidewall of a hollow sphere is smaller than the diameter of the hollow sphere. In some examples, a ratio of the thickness to the diameter is between, and inclusive of, 0.001 and 0.1, such as between, and inclusive of, 0.01 and 0.1 in some examples, and between, and inclusive of, 0.02 and 0.08 in some other examples. A hollow sphere can be made of any of various materials, such as, but not limited to, glass, ceramic, polymer, metal, and/or the like.

In some alternative examples, each one or at least one of the low-density spheres 120 is a non-hollow foam sphere. In such examples, the non-hollow foam sphere does not have a single hollow space, such as with a hollow sphere. Rather, the non-hollow foam sphere is made of a solid piece of foam, which has multiple hollow spaces in the form of multiple open or closed cells. In some examples, the foam of the non-hollow foam sphere is one or more of polystyrene foam, expanded polystyrene (EPS) foam, expanded polypropylene (EPP) foam, polyethylene foam, polyurethane foam, and/or any of various other types of foam.

As used herein, in some examples, a low-density sphere 120 is a hollow or non-hollow sphere having a density of between, and inclusive of, 0.005 g/cm³ and 0.6 g/cm³, such as between, and inclusive of, 0.05 g/cm³ and 0.4 g/cm³ in some examples, between, and inclusive of, 0.1 g/cm³ and 0.3 g/cm³ in some other examples, between, and inclusive of, 0.02 g/cm³ and 0.15 g/cm³ in yet some other examples, and between, and inclusive of, 0.015 g/cm³ and 0.03 g/cm³ in some further examples.

Although not shown, in some examples, the low-density spheres 120 can be pre-coated with a uniform coating before being loaded into the mold 102 at block 220. The uniform coating can have a constant (i.e., non-variable) thickness across the sphere. In effect, if pre-coated, the uniform coating defines an exterior surface of the low-density sphere 120. The uniform coating can be made of any of various materials, such as, but not limited to, a pre-ceramic material, resin matrix composite material, nano-scale materials, glass, water glass, colloidal silica nanoparticles, polymer, ceramic, and/or the like. In some cases, such as when the low-density sphere 120 is a non-hollow foam sphere, the uniform coating can provide strength and/or an increased thermal stability to the underlying sphere.

In some examples, the low-density spheres 120, when introduced into the interior cavity 112 of the mold 104, occupy at least 50% of the total volume of the interior cavity 112. In some examples, the low-density spheres 120 occupy not less than 50% and not greater than 99% of the total volume of the interior cavity 112.

In some examples, such as shown in Figures 3 and 4, all the low-density spheres 120 loaded into the mold 102 at block 220 have the same size. However, in some other examples, the low-density spheres loaded into the mold 102 at block 220 can have different sizes and can be loaded into the mold 102 at separate times corresponding to their sizes. The size of the differently-shaped low-density spheres can be selected, in view of the size of the mold 102, so that the differently-shaped low-density spheres form a lattice arrangement as described above.

The thermally-conductive media layers 150 are positioned within the mold 102, at block 210, after or before the low-density spheres 120 are loaded into the mold 102. Referring to Figures 2-4, which depicts an example where the thermally-conductive media layers 150 are positioned within the mold 102 before the low-density spheres 120 are loaded into the mold 102. In other words, in such an example, the thermally-conductive media layers 150 are in place (e.g., fixed) within the mold 102 when the low-density spheres 120 are loaded into the mold 102. As the low-density spheres 120 are loaded into the mold 102, at block 220, the low-density spheres 120 pass through the thermally-conductive media layers 150 in place within the mold 102 and begin to form a bed of spheres within the interior cavity 112 at the bottom of the mold 102. As more and more low-density spheres 120 are loaded into the mold 102, the height of the bed of spheres increases until the interior cavity 112 is filled with low-density spheres 120 and the low-density spheres 120 surround the thermally-conductive media layers 150 (see, e.g., Figure 5). In the example of Figures 2-4, the thermally-conductive media layers 150 are porous and have a porosity high enough to enable the low-density spheres 120 to pass through as the spheres are loaded into the mold 102. In other words, the thermally-conductive media layers 150 have at least some voids larger than each one of the low-density spheres 120. Because the low-density spheres 120 can pass through the thermally-conductive media layers 150 in this example, the thermally-conductive media layers 150 can be angled (e.g., perpendicular) to a loading direction of the low-density spheres 120. In some examples, including the illustrated example, loading of the low-density spheres 120 is aided by gravity such that the loading direction of the low-density spheres 120 is a vertical direction or top-to-bottom direction, or a substantially vertical direction or top-to-bottom direction.

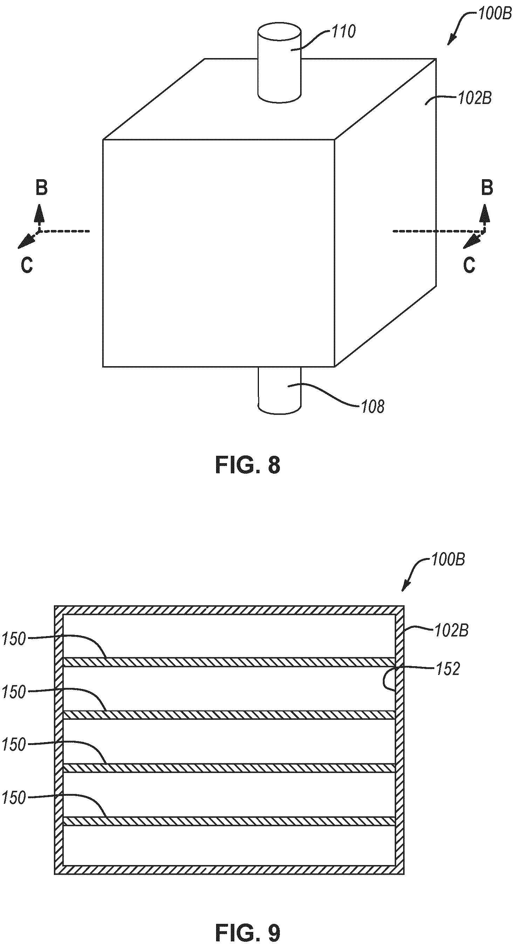

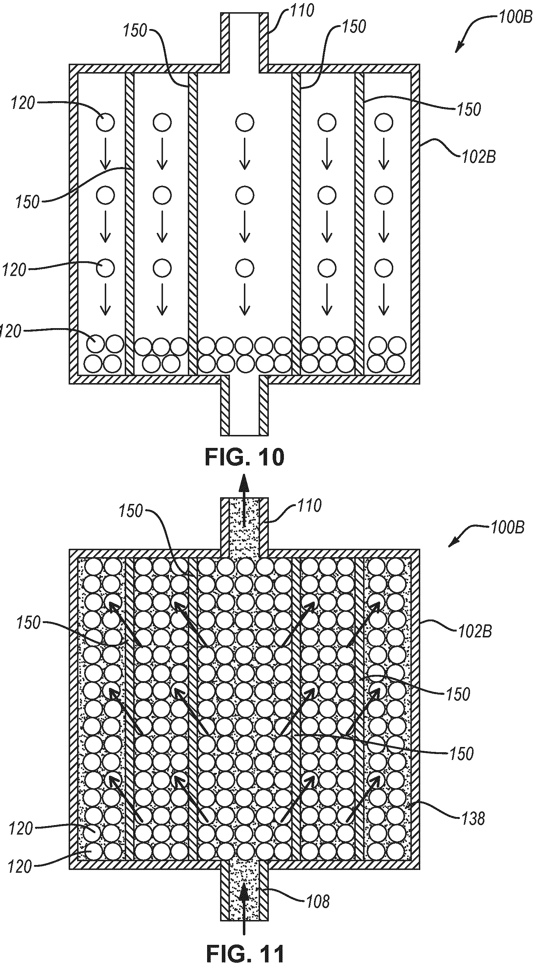

Referring to Figures 8-10, which depict another example where the thermally-conductive media layers 150 are positioned within the mold 102 before the low-density spheres 120 are loaded into the mold 102. However, unlike the example of Figures 2-4, as the low-density spheres 120 are loaded into the mold 102 (see, e.g., Figure 10), at block 220, the low-density spheres 120 do not pass through the thermally-conductive media layers 150 before forming a bed of spheres within the interior cavity 112 at the bottom of the mold 102. In other words, in the example of Figures 8-10, the thermally-conductive media layers 150 of the mold 102B of the tool 100B do not have a porosity high enough to enable the low-density spheres 120 to pass through. Instead, the thermally-conductive media layers 150 can act as barriers that prevent passage of the low-density spheres 120. Because the thermally-conductive media layers 150 are non-porous to the low-density spheres 120, the thermally-conductive media layers 150 in the example of Figures 8-10 are orientated differently than in the example of Figures 2-4. For example, the thermally-conductive media layers 150 of the mold 102B can be parallel or substantially parallel to each other and parallel to the loading direction of the low-density spheres 120 such that the low-density spheres 120 are loaded and stacked vertically between adjacent ones of the thermally-conductive media layers 150, as shown in Figures 10 and 11.

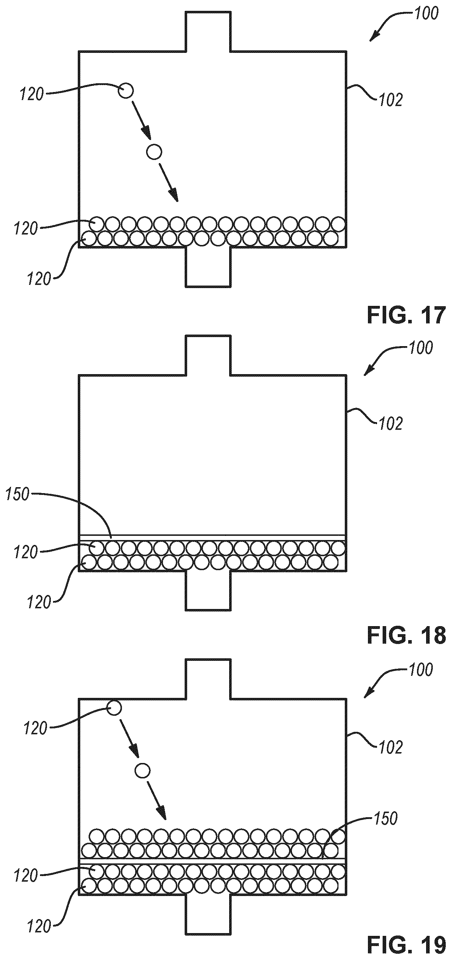

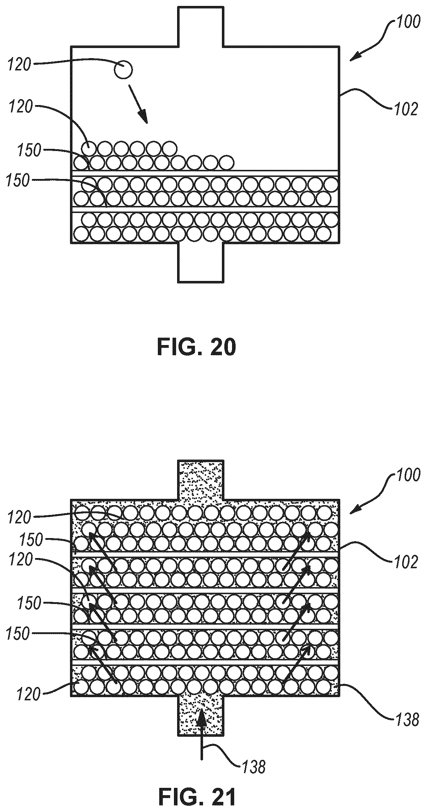

In contrast to the foregoing examples, Figures 17-20 depict an example where the thermally-conductive media layers 150 are positioned within the mold 102 after low-density spheres 120 are loaded into the mold 102. In other words, in such an example, the thermally-conductive media layers 150 are not in place within the mold 102 when low-density spheres 120 are initially loaded into the mold 102. Instead, as shown in Figure 17, a first quantity of the low-density spheres 120 is loaded into the mold 102 before any one of the thermally-conductive media layers 150 is positioned in the mold 102. After the first quantity of the low-density spheres 120 is loaded, as shown in Figure 18, a first one of the thermally-conductive media layers 150 is positioned within the mold 102 onto the first quantity of the low-density spheres 120. Then, as shown in Figure 19, a second quantity of the low-density spheres 120 is loaded into the mold 102 and onto the first one of the thermally-conductive media layers 150. Subsequently, as shown in Figure 20, a second one of the thermally-conductive media layers 150 is positioned within the mold 102 onto the second quantity of the low-density spheres 120, and a third quantity of the low-density spheres 120 is loaded into the mold 102 and onto the second one of the thermally-conductive media layers 150. This process can be repeated until a desired number of thermally-conductive media layers 150 and layers of low-density spheres 120 are positioned and loaded into the mold 102. Because in the example of Figures 17-20, the thermally-conductive media layers 150 are positioned onto a quantity of low-density spheres 120, which are pre-loaded, the thermally-conductive media layers 150 are not required to be porous to the low-density spheres 120 in some examples. However, in some other examples of the example of Figures 17-20, the thermally-conductive media layers 150 can be porous to the low-density spheres 120.

Referring to Figure 23 generally, and specifically to Figures 5, 11, and 21, after the mold 102 is filled with low-density spheres 120 and thermally-conductive media layers 150 according to blocks 210 and 220, the method 200 further includes (block 230) introducing a resin 138 into the mold 102 so that the one or more thermally-conductive layers 150 and the low-density spheres 120 within the mold 102 are embedded within the resin 138. In some examples, the thermally-conductive media layers 150 are porous to the resin 138 such that the resin 138 passes through the thermally-conductive media layers 150 as the resin 138 is introduced into and fills the mold 102. In other words, the thermally-conductive media layers 150 have a porosity high enough to enable the resin 138, when in a flowable (e.g., fluid or liquid) state to pass through as the resin 138 is introduced into the mold 102. For example, referring to Figures 5 and 21, the resin 138 is introduced into the interior cavity 112 of the mold 102 through a resin inlet 108 of the tool 100 and passes through the thermally-conductive media layers 150 as it fills up the interior cavity 112. The resin inlet 108 is operable to introduce the resin 138 from a resin source into the interior cavity 112. In some examples, including the illustrated example, the resin inlet 108 is located at the bottom of the mold 102 such that the resin 138 fills up the interior cavity 112 in a bottom-to-top direction and can pass through the thermally-conductive media layers 150 in the same direction or same general direction. Once the resin 138 fills the interior cavity 112, any excess quantities of the resin 138 can be released from the interior cavity 112 through a resin outlet 110 of the tool 100. When the interior cavity 112 is filled with the resin 138, the thermally-conductive media layers 150 and the low-density spheres 120 are embedded in the resin 138. In some other examples, the resin 118 may be introduced into the mold 102 through a primary resin inlet located at the top of the mold 102 and passively gravity-fed through the mold 102 in a top-to-bottom direction or a generally top-to-bottom direction, such that a top section of the mold is filled before any underneath sections of the mold. In some examples, the resin 138 is pumped (i.e., actively pushed) through the primary resin inlet and into the mold 102 via a pump (not shown), in addition to being actively pulled via the vacuum ports.

According to the example of Figure 11, in one configuration, as shown, the thermally-conductive media layers 150 are porous to the resin 138, which is allowed to pass through the thermally-conductive media layers 150 in a lateral or side-to-side direction, or a generally lateral or side-to-side direction, as the resin 138 fills the interior cavity 112. But, in an alternative configuration, the thermally-conductive media layers 150 are not porous to the resin 138. In such a configuration, the resin 138 can be introduced at multiple locations between the thermally-conductive media layers 150 and allowed to fill up the spaces between the thermally-conductive media layers 150 without passing through the thermally-conductive media layers 150. In some other examples where the thermally-conductive media layers 150 are not porous to the resin 138, they can be configured as strips, rods, or tubes, as described above in association with Figure 12, such that the resin 138 flows around (rather than through) the thermally-conductive media layers 150 as the resin 138 fills the mold.

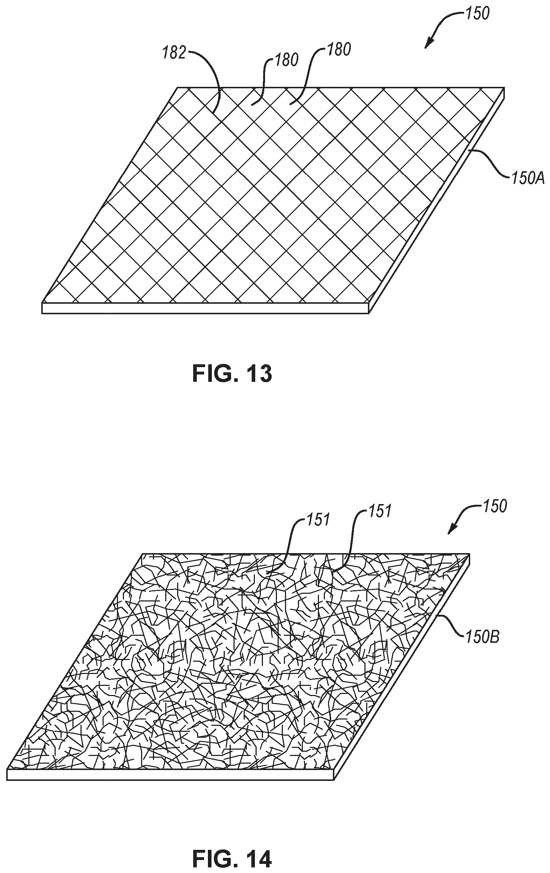

As presented above, in some examples, at least one of the thermally-conductive media layers 150 is porous to both the resin 138 and the low-density spheres 120. Referring to Figure 13, in some examples, the thermally-conductive media layer 150 is a mesh sheet 150A having a mesh 182 that defines apertures 180 sized to allow the low-density spheres 120 to pass through. In some examples, the mesh sheet 150A is a perforated metal sheet or foil, which can be formed via a stamping process in some examples. For example, the apertures 180 can be stamped into in a solid sheet of metal to form the mesh 182. In some alternative examples, the mesh sheet 150A is an expanded metal foil that is formed by perforating a solid sheet of metal with slits and expanding the slits into openings by pulling apart or expanding the foil.

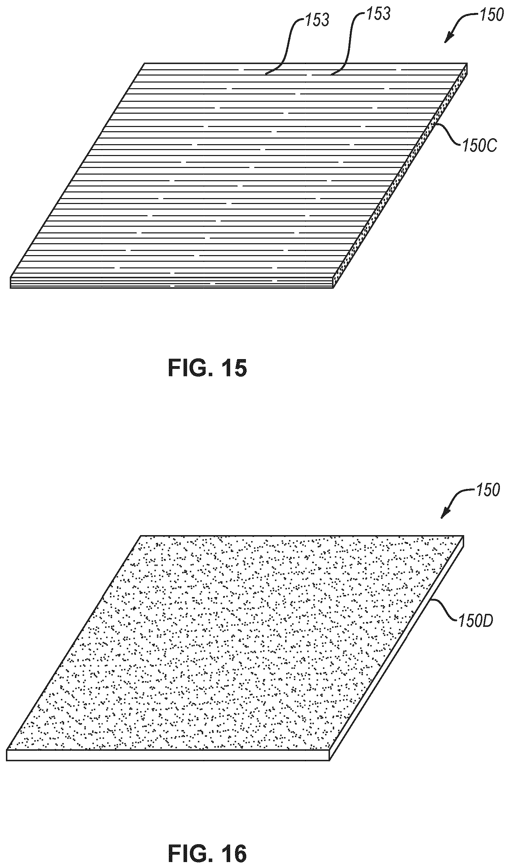

Also presented above, in some examples, at least one of the thermally-conductive media layers 150 is porous to the resin 138 but not porous to the low-density spheres 120. Referring to Figure 14, in some examples, the thermally-conductive media layer 150 is a chopped-fiber sheet 150B made of a porous sheet of chopped fibers 151. The chopped fibers 151 can be uniformly distributed along the chopped-fiber sheet 150B, in some examples, or non-uniformly distributed along the chopped-fiber sheet 150B, in some other examples, to provide directional thermal conductivity. Alternatively, as shown in Figure 15, in some examples, the thermally-conductive media layer 150 is a continuous-fiber sheet 150C made of a porous sheet of continuous fibers 153 (e.g., fibers, yarns, tows, etc.). The continuous fibers 153 are arranged parallel to each other and extend an entire length or width of the thermally-conductive media layer 150.

In some examples where the thermally-conductive media layers 150 are made of chopped or continuous fibers, the sheets can be fully consolidated, but have intentionally formed holes in the sheets, or the sheets can include enough resin to bind together the fibers, but not enough resin to prevent the resin 138 from passing through the sheets.

According to some other examples where the thermally-conductive media layer 150 is porous to the resin 138 but not porous to the low-density spheres 120, referring to Figure 16, the thermally-conductive media layer 150 is a fabric sheet 150D. The fabric sheet 150D can be a sheet of nonwoven fabric, woven fabric, felt, and/or the like.

Referring back to Figures 1-5, each one of the resin inlet 108 and the resin outlet 110 can include a valve that is selectively operable to regulate the flow of the resin 138 into and out of the interior cavity 112, respectively. In some examples, including the illustrated example, the resin inlet 108 is located at the bottom of the mold 102 and the resin outlet 110 is located at the top of the mold 102. However, in some other examples, the resin inlet 108 and the resin outlet 110 can be located in other respective locations on the mold 102. Alternatively, the tool 100 can include multiple resin inlets 108 and/or resin outlets 110 positioned at various locations about the mold 102. In some examples, the resin 138 can be pumped (i.e., actively pushed) through the resin inlet 108 and into the mold 102 via a pump (not shown). In some examples, the resin 138 can also be actively pulled via a negative pressure introduced at the top of the mold 102, such as via a negative pressure device (e.g., a vacuum device).

The resin 138 can be any of various types of resin conducive to embedding and immobilizing the low-density spheres 120 and the thermally-conductive media layers 150. According to some examples, the resin 138 is one or more of a pure resin material (e.g., epoxy resin), a pre-ceramic resin (e.g., silane pre-ceramic resin), a resin matrix composite material (i.e., reinforcement materials embedded in a matrix material), a high-modulus polymer (e.g., highly cross-linked stiff-chain polymer, nano-particle loaded polymer, colloidal silica nanoparticle loaded resin), and the like. The reinforcement materials of the resin matrix composite material can be any of various materials, such as fused silica, nano-particles, milled carbon fibers, and/or the like. According to some examples, the resin 138 includes density-reducing components, such as smaller low-density spheres (e.g., hollow spheres such as hollow glass, ceramic, or polymer spheres), which helps to reduce the density of the resin 138 without compromising the strength of the resin 138.

Referring to Figure 23 generally, after the mold 102 is filled with the resin 138, the method 200 can further include (block 240) solidifying the resin 138 as part of a solidification process (e.g., curing process) of the resin 138 and (block 250) transferring heat through at least one thermally-conductive media layer 150. In some examples, the resin 138 is solidified at room temperature without the addition of external heat. However, in some other examples, as shown in Figure 6A, the tool 100 includes one or more heaters 160 configured to generate heat 162 and direct the heat 162 into the mold 102. The heaters 160 can be any of various types of heaters known in the art, such as infrared heaters, electric heaters, curing tank heaters, heat blankets, and/or the like. Alternatively, the heater 160 can be an autoclave or oven within which the mold 102 can be positioned, heated, and pressurized, if desired. Regardless of the type of heater, at block 240 of the method 200, when external heat is required, heat is transferred into the mold 102 (whether in a single cycle or over the course of multiple cycles) so that the resin 138 reaches a solidification temperature (e.g., curing temperature) associated with solidification (e.g., curing) of the resin 138. In some situations, heat transfer from outside of the mold 102 to some locations (e.g., central locations) deeper within the mold 102 can be difficult and may result in non-uniform heating of the resin 138, which can create residual stresses within the final part. However, as shown in Figure 6A, the thermally-conductive media layers 150, having a thermal conductivity greater than the resin 138, helps to distribute the heat 162 towards the deeper locations within the mold 102, thus promoting a more uniform distribution of heat throughout the mold 102, a more uniform solidification of the resin 138, and a reduction in residual stresses within the final part. Accordingly, in some examples, and as shown by directional arrows in Figure 6A, transferring heat through at least one thermally-conductive media layer 150 at block 250 includes transferring heat in a direction towards central portions of the mold 102.

In some examples, and without limitation, the solidification temperature of the resin 138 is between, and inclusive of, 21°C (i.e., room temperature) and 232°C, such as between, and inclusive of, 21°C and 180°C, in some examples, between, and inclusive of, 21°C and 125°C, in some other examples, and between, and inclusive of, 21°C and 65°C, in yet some other examples. The resin 138 is held at the solidification temperature for a predetermined period of time (and/or the resin 138 can undergo multiple identical or different cure cycles associated with specific temperature ramp rates) to effectuate the solidification of the resin 138.

As presented above, solidification of the resin 138 is the result of an exothermic reaction, which generates additional heat. The heat generated by the exothermic reaction, if left unchecked or unmitigated, can lead to dangerous temperature spikes (i.e., thermal runaway). Accordingly, in some examples, and as shown by directional arrows in Figure 6B, transferring heat through at least one thermally-conductive media layer 150 at block 250 includes transferring heat in a direction towards the interior surface 152 and away from central portions of the mold 102. More specifically, transferring heat 164 through the thermally-conductive media layers 150 includes transferring heat towards (and eventually away from) the interior surface 152 of the mold 102 as the resin 138 is being solidified and excessive exothermic reactions are occurring, such that temperatures at the center portions of the mold 102 are hotter than those nearer the interior surface 152. The heat 164 transferred towards the interior surface 152 of the mold 102 includes at least some of the heat generated via the exothermic reaction.

Transferring the heat towards the interior surface 152 results in a cooling of the temperature in the more central locations within the mold where thermal runaway potential is higher, thus reducing and even mitigating the likelihood of thermal runaway events, as well as helping to promote more uniform temperature distribution throughout the mold 102, more uniform solidification of the resin 138, and a reduction in residual stresses within the final part. Accordingly, the positioning of a portion of the thermally-conductive media layer 150 away from the interior surface 152 helps the thermally-conductive media layer 150 collect heat at a more central location within the interior cavity 112 and transfer at least some of that heat away from the central location toward the interior surface 152. In this manner, heat spikes in central locations within the interior cavity 112 are mitigated by the thermally-conductive media layers 150 and more uniform solidification of the resin 138 is achieved. Eventually, the heat 164 is transferred from the thermally-conductive media layers 150 to the walls of the mold 102, such as via conduction. From the walls of the mold 102, all or some of the heat 164 is dissipated or released into the environment via passive or forced thermal transfer techniques and devices, such as heat exchangers.

After the resin 138 is solidified at block 240, the solidified resin and the thermally-conductive media layers 150 form the syntactic-foam part 142, an example of which is shown in Figure 6B. The syntactic-foam part 142 includes multiple layers of the low-density spheres 120 infused with the resin 138 and multiple thermally-conductive media layers 150 in some examples. The syntactic-foam part 142 can be joined with other different or similar syntactic-foam parts to form a more complex structure.

As mentioned above, in some examples, the thermally-conductive media layers 150 are configured to enhance the thermal conductivity of the syntactic-foam part 142. Accordingly, the thermally-conductive media layers 150 have a thermal conductivity that is greater than the thermal conductivity of the syntactic foam of syntactic-foam part 142 (which is based on various factors, including the thermal conductivity of the low-density spheres 120 and the thermal conductivity of the resin 138). In some examples, a ratio of the thermal conductivity of the thermally-conductive media layers 150 to the thermal conductivity of the syntactic foam of the syntactic-foam part 142 is between, and inclusive of, 150 and 40,000, such as between, and inclusive of, 500 and 6,500 in some examples, and between, and inclusive of, 850 and 4,500 in some other examples. According to some examples, the relatively high thermal conductivity and relatively low density of the thermally-conductive media layers 150 result in a specific thermal conductivity of the thermally-conductive media layers 150 that is between, and inclusive of, 40 W/mK/(g/cc) and 1,600 W/mK/(g/cc) (watts per meter-Kelvin per grams per cubic centimeter), such as between, and inclusive of, 80 W/mK/(g/cc) and 1,400 W/mK/(g/cc) in some examples, and between, and inclusive of, 90 W/mK/(g/cc) and 500 W/mK/(g/cc) in some other examples.

According to some examples, each one of the thermally-conductive media layers 150 is made of a metallic material, such as silver (and silver alloys), copper (and copper alloys), aluminum (and aluminum alloys (e.g., aluminum 1050)), carbon compounds (e.g. silicon carbide, boron carbide, graphite, and the like), silicon, magnesium, aluminum nitride, and/or carbon fiber (e.g., PAN-based carbon fiber (e.g., M55J carbon fiber), pitch-based carbon fiber, carbon nanofibers, and/or the like). In some examples, each one of the thermally-conductive media layers 150 can have a thickness between, and inclusive of, 25 micrometers and 75 micrometers.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. A method (200) of making a syntactic-foam part (142), the method (200) comprising:
   positioning at least one thermally-conductive media layer (150) within a mold (102) such that at least a portion of the at least one thermally-conductive media layer (150) is spaced apart from an interior surface (152) of the mold (102);
   loading low-density spheres (120) into the mold (102) such that the low-density spheres (120) form a lattice arrangement (130) within the mold (102) and surround the at least one thermally-conductive media layer (150);
   introducing a resin (138) into the mold (102) so that the at least one thermally-conductive layer (150) and the low-density spheres (120) are embedded within the resin (138), wherein the at least one thermally-conductive media layer (150) has a thermal conductivity that is greater than a thermal conductivity of the low-density spheres (120) and a thermal conductivity of the resin (138);
   solidifying the resin (138) after the resin (138) is introduced into the mold (102); and
   transferring heat through the at least one thermally-conductive media layer (150) when the resin (138) is being solidified.
Example 2. The method (200) according to Example 1, wherein the at least one thermally-conductive media layer (150) is positioned within the mold (102) before the low-density spheres (120) are loaded into the mold (102).
Example 3. The method (200) according to Example 2, wherein:
   the at least one thermally-conductive media layer (150) is porous; and
   at least some of the low-density spheres (120) pass through the at least one thermally-conductive media layer (150) when the low-density spheres (120) are loaded into the mold (102).
Example 4. The method (200) according to Example 3, wherein the at least one thermally-conductive media layer (150) is perpendicular to a loading direction of the low-density spheres (120) and a filling direction of the resin (138).
Example 5. The method (200) according to Example 2 or Example 3, wherein the at least one thermally-conductive media layer (150) is parallel to a loading direction of the low-density spheres (120) and a filling direction of the resin (138).
Example 6. The method (200) according to Example 5, wherein the at least one thermally-conductive media layer (150) is partially porous such that:
   the low-density spheres (120) do not pass through the at least one thermally-conductive media layer (150) when loaded into the mold (102); and
   the resin (138) does pass through the at least one thermally-conductive media layer (150) when introduced into the mold (102).
Example 7. The method (200) according to any preceding Example, wherein:
   the at least one thermally-conductive media layer (150) is porous; and
   at least a portion of the resin (138) passes through the at least one thermally-conductive media layer (150) when the resin (138) is introduced into the mold (102).
Example 8. The method (200) according to any preceding Example, wherein:
   loading the low-density spheres (120) into the mold (102) comprises loading a first quantity of the low-density spheres (120) and loading a second quantity of the low-density spheres (120);
   positioning the at least one thermally-conductive media layer (150) within the mold (102) comprises positioning the at least one thermally-conductive media layer (150) onto the first quantity of the low-density spheres (120) after the first quantity of the low-density spheres (120) is loaded into the mold (102); and
   the second quantity of the low-density spheres (120) is loaded onto the at least one thermally-conductive media layer (150).
Example 9. The method (200) according to any preceding Example, wherein:
   the at least one thermally-conductive media layer (150) extends across an entirety of a width, a height, or a length of the mold (102) and is in thermal conduction engagement with the interior surface (152) of the mold (102) at opposing ends of the at least one thermally-conductive media layer (150); and
   at least a portion of the heat transferred through the at least thermally-conductive media layer (150) is transferred directly to the interior surface (152) of the mold (102) from the at least one thermally-conductive media layer (150) via conduction.
Example 10. The method (200) according to any preceding Example, wherein:
   positioning the at least one thermally-conductive media layer (150) within the mold (102) comprises positioning a plurality of thermally-conductive media layers (150) within the mold (102) at spaced-apart locations within the mold (102);
   the low-density spheres (120) are loaded into the mold (102) such that the low-density spheres (120) surround the plurality of thermally-conductive media layers (150); and
   the resin (138) is introduced into the mold (102) so that the plurality of thermally-conductive media layers (150) are embedded within the resin (138).
Example 11. The method (200) according to Example 10, wherein the plurality of thermally-conductive media layers (150) are uniformly spaced within the mold (102).
Example 12. The method (200) according to Example 10, wherein the plurality of thermally-conductive media layers (150) are non-uniformly spaced within the mold (102).
Example 13. The method (200) according to any preceding Example, wherein the at least one thermally-conductive media layer (150) has a specific thermal conductivity between, and inclusive of, 80 watts per meter-kelvin per grams per cubic centimeter (W/mK/(g/cc)) and 1,400 W/mK/(g/cc).
Example 14. The method (200) according to any preceding Example, wherein the at least one thermally-conductive media layer (150) comprises one of a fabric, continuous fibers, chopped fibers, rods, tubes, strips, a perforated sheet, or an expanded sheet.
Example 15. A syntactic-foam part (142), comprising:
   a resin (138) in a cured state;
   low-density spheres (120) arranged in a lattice arrangement (130) and embedded within the resin (138); and
   at least one thermally-conductive media layer (150) surrounded by the low-density spheres (120) and embedded within the resin (138);
   wherein the at least one thermally-conductive media layer (150) has a thermal conductivity that is greater than a thermal conductivity of the low-density spheres (120) and a thermal conductivity of the resin (138).
Example 16. The syntactic-foam part (142) according to Example 15, wherein:
   the at least one thermally-conductive media layer (150) is porous; and
   at least some of the low-density spheres (120) are sized to be passable through the at least one thermally-conductive media layer (150).
Example 17. The syntactic-foam part (142) according to Example 15 or Example 16, wherein:
   the at least one thermally-conductive media layer (150) is porous; and
   the resin (138), when in a flowable state, is passable through the at least one thermally-conductive media layer (150).
Example 18. The syntactic-foam part (142) according to any of Examples 15 - 17, wherein the at least one thermally-conductive media layer (150) extends across an entirety of a width, a height, or a length of the syntactic-foam part (142).
Example 19. The syntactic-foam part (142) according to any of Examples 15 - 18, wherein the syntactic-foam part (142) comprises a plurality of thermally-conductive media layers (150) spaced apart from each other.
Example 20. The syntactic-foam part (142) according to Example 19, wherein the plurality of thermally-conductive media layers (150) are uniformly spaced within the syntactic-foam part (142).
Example 21. The syntactic-foam part (142) according to Example 19, wherein the plurality of thermally-conductive media layers (150) are non-uniformly spaced within the syntactic-foam part (142).
Example 22. The syntactic-foam part (142) according to any of Examples 15 - 21, wherein the at least one thermally-conductive media layer (150) has a specific thermal conductivity between, and inclusive of, 80 watts per meter-kelvin per grams per cubic centimeter (W/mK/(g/cc)) and 1,400 W/mK/(g/cc).
Example 23. The syntactic-foam part (142) according to any of Examples 15 - 22, wherein the at least one thermally-conductive media layer (150) comprises one of a fabric, continuous fibers, chopped fibers, rods, tubes, strips, a perforated sheet, or an expanded sheet.

## Claims

1. A method (200) of making a syntactic-foam part (142), the method (200) comprising:
positioning (210) at least one thermally-conductive media layer (150) within a mold (102) such that at least a portion of the at least one thermally-conductive media layer (150) is spaced apart from an interior surface (152) of the mold (102);
loading (220) low-density spheres (120) into the mold (102) such that the low-density spheres (120) form a lattice arrangement (130) within the mold (102) and surround the at least one thermally-conductive media layer (150);
introducing (230) a resin (138) into the mold (102) so that the at least one thermally-conductive layer (150) and the low-density spheres (120) are embedded within the resin (138), wherein the at least one thermally-conductive media layer (150) has a thermal conductivity that is greater than a thermal conductivity of the low-density spheres (120) and a thermal conductivity of the resin (138);
solidifying (240) the resin (138) after the resin (138) is introduced into the mold (102); and
transferring (250) heat through the at least one thermally-conductive media layer (150) when the resin (138) is being solidified.

2. The method (200) according to claim 1, wherein the at least one thermally-conductive media layer (150) is positioned within the mold (102) before the low-density spheres (120) are loaded into the mold (102).

3. The method (200) according to claim 2, wherein:
the at least one thermally-conductive media layer (150) is porous;
at least some of the low-density spheres (120) pass through the at least one thermally-conductive media layer (150) when the low-density spheres (120) are loaded into the mold (102), and optionally,
wherein the at least one thermally-conductive media layer (150) is perpendicular to a loading direction of the low-density spheres (120) and a filling direction of the resin (138).

4. The method (200) according to claim 2, wherein the at least one thermally-conductive media layer (150) is parallel to a loading direction of the low-density spheres (120) and a filling direction of the resin (138), and optionally,
wherein the at least one thermally-conductive media layer (150) is partially porous such that:
the low-density spheres (120) do not pass through the at least one thermally-conductive media layer (150) when loaded into the mold (102); and
the resin (138) does pass through the at least one thermally-conductive media layer (150) when introduced into the mold (102).

5. The method (200) according to any of claims 1 - 3, wherein:
the at least one thermally-conductive media layer (150) is porous; and
at least a portion of the resin (138) passes through the at least one thermally-conductive media layer (150) when the resin (138) is introduced into the mold (102).

6. The method (200) according to any preceding claim, wherein:
loading the low-density spheres (120) into the mold (102) comprises loading a first quantity of the low-density spheres (120) and loading a second quantity of the low-density spheres (120);
positioning the at least one thermally-conductive media layer (150) within the mold (102) comprises positioning the at least one thermally-conductive media layer (150) onto the first quantity of the low-density spheres (120) after the first quantity of the low-density spheres (120) is loaded into the mold (102); and
the second quantity of the low-density spheres (120) is loaded onto the at least one thermally-conductive media layer (150).

7. The method (200) according to any preceding claim, wherein:
the at least one thermally-conductive media layer (150) extends across an entirety of a width, a height, or a length of the mold (102) and is in thermal conduction engagement with the interior surface (152) of the mold (102) at opposing ends of the at least one thermally-conductive media layer (150); and
at least a portion of the heat transferred through the at least thermally-conductive media layer (150) is transferred directly to the interior surface (152) of the mold (102) from the at least one thermally-conductive media layer (150) via conduction.

8. The method (200) according to any preceding claim, wherein:
positioning the at least one thermally-conductive media layer (150) within the mold (102) comprises positioning a plurality of thermally-conductive media layers (150) within the mold (102) at spaced-apart locations within the mold (102);
the low-density spheres (120) are loaded into the mold (102) such that the low-density spheres (120) surround the plurality of thermally-conductive media layers (150); and
the resin (138) is introduced into the mold (102) so that the plurality of thermally-conductive media layers (150) are embedded within the resin (138).

9. The method (200) according to claim 8, wherein one or more of:
the plurality of thermally-conductive media layers (150) are uniformly spaced within the mold (102) or the plurality of thermally-conductive media layers (150) are non-uniformly spaced within the mold (102);
the at least one thermally-conductive media layer (150) has a specific thermal conductivity between, and inclusive of, 80 watts per meter-kelvin per grams per cubic centimeter (W/mK/(g/cc)) and 1,400 W/mK/(g/cc); and
the at least one thermally-conductive media layer (150) comprises one of a fabric, continuous fibers, chopped fibers, rods, tubes, strips, a perforated sheet, or an expanded sheet.

10. The method (200) according to any preceding claim, wherein a low-density sphere (120) has a density of between, and inclusive of, 0.005 g/cm³ and 0.6 g/cm³.

11. A syntactic-foam part (142), comprising:
a resin (138) in a cured state;
low-density spheres (120) arranged in a lattice arrangement (130) and embedded within the resin (138); and
at least one thermally-conductive media layer (150) surrounded by the low-density spheres (120) and embedded within the resin (138);
wherein the at least one thermally-conductive media layer (150) has a thermal conductivity that is greater than a thermal conductivity of the low-density spheres (120) and a thermal conductivity of the resin (138).

12. The syntactic-foam part (142) according to claim 11, wherein a low-density sphere (120) has a density of between, and inclusive of, 0.005 g/cm³ and 0.6 g/cm³.

13. The syntactic-foam part (142) according to claim 11 or claim 12, wherein:
the at least one thermally-conductive media layer (150) is porous; and
at least some of the low-density spheres (120) are sized to be passable through the at least one thermally-conductive media layer (150).

14. The syntactic-foam part (142) according to any of claims 11 - 13, wherein the syntactic-foam part (142) comprises a plurality of thermally-conductive media layers (150) spaced apart from each other; and optionally, wherein one of:
the plurality of thermally-conductive media layers (150) are uniformly spaced within the syntactic-foam part (142); or
the plurality of thermally-conductive media layers (150) are non-uniformly spaced within the syntactic-foam part (142).

15. The syntactic-foam part (142) according to any of claims 11 - 14, wherein one or more of:
the at least one thermally-conductive media layer (150) has a specific thermal conductivity between, and inclusive of, 80 watts per meter-kelvin per grams per cubic centimeter (W/mK/(g/cc)) and 1,400 W/mK/(g/cc);
the at least one thermally-conductive media layer (150) comprises one of a fabric, continuous fibers, chopped fibers, rods, tubes, strips, a perforated sheet, or an expanded sheet; and
the at least one thermally-conductive media layer (150) extends across an entirety of a width, a height, or a length of the syntactic-foam part (142).
